# EUROPEAN PATENT APPLICATION

(11) **EP 2 336 889 A1**
(43) Date of publication of application: **22.06.2011**
(21) Application number: 09809786.8
(22) Date of filing: 13.08.2009
(51) Int. Cl.: G06F 11/30

(54) **DETECTION RULE GENERATION DEVICE, DETECTION RULE GENERATION METHOD, AND COMPUTER PROGRAM**

(30) Priority: 29.08.2008 JP 2008221142
(71) Applicant: International Business Machines Corporation, Armonk, NY 10504 (US)
(72) Inventor: KANEYASU Yuhsuke, Yamato-shi Kanagawa 242-8502 (JP); GOTOH Yasuhisa, Yamato-shi Kanagawa 242-8502 (JP)
(74) Representative: Litherland, David Peter
(86) International application number: PCT/JP2009/064308
(87) International publication number: WO 2010/024133

(57) **Abstract**

To provide a detection rule generating apparatus, a detection rule generating method, and a computer program, capable of generating proper symptoms without being dependent on the degree of operator proficiency. Event detection rules for a system including plural components are generated. System configuration information on the system including related information among the components is acquired, and history information on the system including log information and/or failure information output from each component upon occurrence of a failure is collected. Based on the system configuration information and the history information, candidate events as candidates to be selected for generating a detection rule are identified, and the identified candidate events are presented. Then, based on the presented candidate events, the detection rule is generated.

## Description

### Field of the Invention

The present invention relates to a detection rule generating apparatus, a detection rule generating method, and a computer program, capable of generating a detection rule for detecting such an event to cause a failure more accurately without being dependent on the degree of operator proficiency.

### Background of the Invention

With the rapid development of computer technology today, computer systems are naturally incorporated in backbone systems constructing a social infrastructure. In order to operate the social infrastructure normally at all times, considerable operation costs are required. An autonomic computing system has attracted attention as a technique for reducing the operation costs as much as possible and increasing the degree of system stability.

The autonomic computing system is a generic term describing all major areas of technology for constructing a system-scale, self-managing environment, which means an entire system for detecting a problem or failure occurred in a system and autonomously eliminating the problem or failure. Various methods for detecting a problem or failure occurred in a system are disclosed.

For example, Patent Document 1 discloses a maintenance management system for monitoring failure events at all times, and if a failure has occurred, e-mailing initial analysis data necessary for failure analysis. Also, Patent Document 2 discloses an obstacle factor estimation system for modeling a correspondence between an event and an obstacle factor and a transition between obstacle factors using a finite automaton, and repeating learning to increase the estimation accuracy of the obstacle factors.

Further, Patent Document 3 discloses a failure analysis device for storing configuration information on component devices, resources, and the like, configuring a system, and analyzing the cause of failure at the time of occurrence of a failure based on the stored configuration information. Patent Document 4 discloses a support system for finding a location causing a failure, which stores dependencies among components included in a system so that components as candidates for the cause of failure can be easily identified based on the displayed dependencies.
[Patent Document 1] Japanese Patent Application Publication No. 2001-005692
[Patent Document 2] Japanese Patent Application Publication No. 2007-257184
[Patent Document 3] Japanese Patent Application Publication No. 2005-316728
[Patent Document 4] Japanese Patent Application Publication No. 2008-065668

### Summary of the Invention

However, although the maintenance management system disclosed in Patent Document 1 can obtain initial analysis data necessary for failure analysis, since the initial analysis data do not include system configuration information, this system presents a problem that it is necessary to obtain further detailed information in order to analyze an obstacle specific to each system. Further, although the obstacle factor estimation system disclosed in Patent Document 2 is expected to increase the estimation accuracy of the obstacle factor as more failures occur, it is strongly required that occurrence of a failure should be prevented in a system applied to a backbone infrastructure, and it cannot be said that the obstacle factor estimation system is adapted to the actual conditions.

Further, although Patent Document 3 uses system configuration information and Patent Document 4 uses dependencies among components, respectively, to increase the accuracy of estimating the location causing a failure, both assume that knowledge information (hereinafter called "symptom") with detection rules for detecting events causing failures, to which recommended actions at the time of failure detection, comments, and the like are added, are prestored. Therefore, both are largely dependent on the degree of operator proficiency at the time of symptom generation including the detection rules, and the workload for symptom generation becomes tremendously heavy. This presents a problem that it is difficult to evaluate and improve the detection rules for events causing failures that play the key role in the generated symptoms.

The present invention has been made in view of such circumstances, and it is an object thereof to provide a detection rule generating apparatus, a detection rule generating method, and a computer program, capable of generating proper symptoms without being dependent on the degree of operator proficiency.

In attaining the above object and according to a first invention, a detection rule generating apparatus for generating event detection rules in a system including plural components comprises: configuration information acquiring means for acquiring system configuration information on the system including related information among the components; history information collecting means for collecting history information on the system including log information and/or failure information output from each component upon occurrence of a failure in the system; candidate event identifying means for identifying candidate events, as candidates to be selected for generating a detection rule, based on the acquired system configuration information and the collected history information; and candidate event presenting means for presenting the identified candidate events.

A detection rule generating apparatus according to a second invention is based on the first invention, and further comprises: detection rule generating/storing means for generating and storing the detection rule in a database; and candidate event detecting means for detecting candidate events based on the stored detection rule, wherein the candidate event presenting means presents the detected candidate events.

A detection rule generating apparatus according to a third invention is based on the first or second invention, and further comprises data format converting means for converting the collected log information and/or failure information into a unified data format beforehand, wherein the history information collecting means collects the log information and/or failure information converted in the unified data format.

A detection rule generating apparatus according to a fourth invention is based on any one of the first to third inventions, and further comprises: event selection accepting means for accepting user's selection of at least one event; detection rule extracting means for extracting a detection rule according to a topology including one ore more components corresponding to the at least one event the selection of which has been accepted; detection rule presenting means for presenting the extracted detection rule; and database updating means for accepting updating of the presented detection rule and updating the database.

A detection rule generating apparatus according to a fifth invention is based on the fourth invention, and further comprises singular/plural determination means for determining whether the number of events the selection of which has been accepted by the event selection accepting means is singular, wherein if the singular/plural determination means determines that the number of events is singular, the detection rule extracting means extracts the detection rule as a filter pattern for checking the event.

A detection rule generating apparatus according to a sixth invention is based on the fifth invention, and further comprises: component determination means for determining whether the number of components that sent out events the selection of which has been accepted is singular if the singular/plural determination means determines that the number of events is plural; and event determination means for determining whether the events the selection of which has been accepted are of the same kind if the component determination means determines that the number of components is singular, wherein if the event determination means determines that the events are of the same kind, the detection rule extracting means extracts the detection rule as a threshold pattern for comparing a certain numeric value with a threshold, or if the event determination means determines that the events are of plural kinds, the detection rule extracting means extracts the detection rule as a sequence pattern for detecting the presence or absence of a sequence of events.

A detection rule generating apparatus according to a seventh invention is based on the sixth invention, and further comprises: connection determination means for determining whether plural components are connected in a topology if the component determination means determines that the number of components is plural; and parallel relationship determining means for determining whether the plural components are in a parallel relationship if the connection determination means determines that the plural components are not connected, wherein if the parallel relationship determining means determines that the plural components are not in the parallel relationship, the detection rule extracting means extracts the detection rule as the sequence pattern.

A detection rule generating apparatus according to an eighth invention is based on the seventh invention, and further comprises event determination means for determining whether the events the selection of which has been accepted are of the same kind if the parallel relationship determining means determines that the plural components are in the parallel relationship, wherein if the event determination means determines that the events are of the same kind, the detection rule extracting means extracts the detection rule as the threshold pattern, or if the event determination means determines that the events are of plural kinds, the detection rule extracting means extracts the detection rule as the sequence pattern.

A detection rule generating apparatus according to a ninth invention is based on the seventh invention, wherein if the connection determination means determines that the plural components are connected, the detection rule extracting means extracts the detection rule as the sequence pattern.

A detection rule generating apparatus according to a tenth invention is based on the seventh invention, and further comprises: serial relationship determining means for determining whether the plural components are in a serial relationship if the connection determination means determines that the plural components are connected; and event determination means for determining whether the events the selection of which has been accepted are of the same kind if the serial relationship determining means determines that the plural components are not in the serial relationship, wherein if the event determination means determines that the events are of the same kind, the detection rule extracting means extracts the detection rule as an ordered sequence pattern the order of which is identified, if the event determination means determines that the events are of plural kinds, the detection rule extracting means extracts the detection rule as an unordered sequence pattern the order of which is not identified, or if the serial relationship determining means determines that the plural components are in the serial relationship, the detection rule extracting means extracts the detection rule as the ordered sequence pattern the order of which is identified.

In attaining the above object and according to an eleventh invention, a detection rule generating method, executable on a detection rule generating apparatus for generating event detection rules in a system including plural components, comprises the steps of: acquiring system configuration information on the system including related information among the components; collecting history information on the system including log information and/or failure information output from each component upon occurrence of a failure in the system; identifying candidate events, as candidates to be selected for generating a detection rule, based on the acquired system configuration information and the collected history information; and presenting the identified candidate events.

A detection rule generating method according to a twelfth invention is based on the eleventh invention, and further comprises the steps of: generating and storing the detection rule in a database; detecting candidate events based on the stored detection rule; and presenting the detected candidate events.

A detection rule generating method according to a thirteenth invention is based on the eleventh or twelfth invention, and further comprises the steps of: converting the collected log information and/or failure information into a unified data format beforehand; and collecting the log information and/or failure information converted in the unified data format.

A detection rule generating method according to a fourteenth invention is based on any one of the eleventh to thirteenth inventions, and further comprises the steps of: accepting user's selection of at least one event; extracting a detection rule according to a topology including one or more components corresponding to the at least one event the selection of which has been accepted; presenting the presented detection rule; and accepting updating of the presented detection rule and updating the database.

In attaining the above object and according to a fifteenth invention, a computer program, executable on a detection rule generating apparatus for generating event detection rules in a system including plural components, causes the detection rule generating apparatus to function as: configuration information acquiring means for acquiring system configuration information on the system including related information among the components; history information collecting means for collecting history information on the system including log information and/or failure information output from each component upon occurrence of a failure in the system; candidate event identifying means for identifying candidate events, as candidates to be selected for generating a detection rule, based on the acquired system configuration information and the collected history information; and candidate event presenting means for presenting the identified candidate events.

A computer program according to a sixteenth invention is based on the fifteenth invention, and causes the detection rule generating apparatus to further function as: detection rule generating/storing means for generating and storing the detection rule in a database; and candidate event detecting means for detecting candidate events based on the stored detection rule, wherein the candidate event presenting means presents the detected candidate events.

A computer program according to a seventeenth invention is based on the fifteenth or sixteenth invention, and causes the detection rule generating apparatus to further function as data format converting means for converting the collected log information and/or failure information into a unified data format beforehand, wherein the history information collecting means collects the log information and/or failure information converted in the unified data format.

A computer program according to an eighteenth invention is based on any one of the fifteenth to seventeenth inventions, and causes the detection rule generating apparatus to further function as: event selection accepting means for accepting user's selection of at least one event; detection rule extracting means for extracting a detection rule according to a topology including one or more components corresponding to the at least one event the selection of which has been accepted; detection rule presenting means for presenting the extracted detection rule; and database updating means for accepting updating of the presented detection rule and updating the database.

According to the present invention, since related information among components is included in system configuration information, detection rules for events causing failures can be generated to include not only the dependencies among components but also the related information. Further, candidate events are presented based on the detection rules, so that not only can detection rule generation work by a user be effectively supported, but the detection rules of a certain level or higher can also be generated reliably without asking the skillful degree of detection rule generation.

### Brief Description of the Drawings

FIG. 1 is a block diagram showing a configuration example of a detection rule generating apparatus according to the embodiment of the present invention;
FIG. 2 is a functional block diagram upon detection rule generation by the detection rule generating apparatus 1 according to the embodiment of the present invention;
FIG. 3 is a functional block diagram upon updating the detection rules by the detection rule generating apparatus 1 according to the embodiment of the present invention;
FIG. 4 is an illustration of a screen displayed on a display device;
FIG. 5 is an illustration of typical rule patterns of generated detection rules;
FIG. 6 is a flowchart showing a procedure of detection rule generating processing by a CPU of the detection rule generating apparatus according to the embodiment of the present invention;
FIG. 7 is an illustration of candidate events when a filter pattern is selected from the detection rules;
FIG. 8 is an illustration of candidate events when an ordered sequence pattern is selected from the detection rules.
FIG. 9 is an illustration of candidate events when an unordered sequence pattern is selected from the detection rules;
FIG. 10 is an illustration of candidate events when a threshold pattern is selected from the detection rules;
FIG. 11 is a flowchart showing a procedure of detection rule update processing by the CPU of the detection rule generating apparatus according to the embodiment of the present invention;
FIG. 12 is a flowchart showing a procedure of detection rule extracting processing by the CPU of the detection rule generating apparatus according to the embodiment of the present invention;
FIG. 13 a flowchart showing the procedure of detection rule extracting processing by the CPU of the detection rule generating apparatus according to the embodiment of the present invention;
FIG. 14 is an illustration of a topology when the number of selected events is singular;
FIG. 15 is an illustration of a topology when the number of selected events is plural and the selected events are of the same kind;
FIG. 16 is an illustration of a topology when the number of selected events is plural and the selected events are of plural kinds;
FIG. 17 is an illustration of a topology when the number of selected events is plural, the relationship among components is uncorrelated, and the selected events are of the same kind;
FIG. 18 is an illustration of a topology when the number of selected events is plural, the relationship among components is uncorrelated, and the selected events are of plural kinds;
FIG. 19 is an illustration of a topology when the number of selected events is plural, the relationship among components is a parallel relationship, and the selected events are of the same kind;
FIG. 20 is an illustration of a topology when the number of selected events is plural, the relationship among components is the parallel relationship, and the selected events are of plural kinds;
FIG. 21 is an illustration of a topology when the number of selected events is plural, the relationship among components is not a perfect serial relationship, and the selected events are of the same kind;
FIG. 22 is an illustration of a topology when the number of selected events is plural, the relationship among components is not the perfect serial relationship, and the selected events are of plural kinds;
FIG. 23 is an illustration of a topology when the number of selected events is plural, the relationship among components is the perfect serial relationship, and the selected events are of the same kind; and
FIG. 24 is an illustration of a topology when the number of selected events is plural, the relationship among components is the perfect serial relationship, and the selected events are of plural kinds.

### Detailed Description of the Invention

A detection rule generating apparatus according to an embodiment of the present invention will be specifically described below with reference to the accompanying drawings. The following embodiment does not limit the inventions described in the scope of claims, and not all the combinations of features described in the embodiment are requisites as resolving means of the present invention.

Further, the present invention can be carried out in a variety of different modes, and should not be limited to the description given for the embodiment. It should be noted that the same reference numerals are employed throughout the embodiment to denote the same elements.

The following embodiment describes the detection rule generating apparatus configured to introduce a computer program into a computer system. As will be apparent to those skilled in the art, part of the present invention can be implemented as a computer program capable of being executed on a computer. Therefore, the present invention can take the form of a mode as hardware called the detection rule generating apparatus, a mode as software, or a mode as a combination of software and hardware. The computer program can be recorded on a recording medium readable by any computer, such as a hard disk, a DVD, a CD, an optical storage device, and a magnetic storage device.

In the embodiment of the present invention, system configuration information includes related information among components, so that the detection rules can be generated to include not only the dependencies among components but also the related information. Further, candidate events are presented based on the detection rules, so that not only can detection rule generation work by a user be effectively supported, but the detection rules of a certain level or higher can also be generated reliably without asking the skillful degree of detection rule generation. Here, the term "component" means a component at large in a computing environment, such as service, application, middleware, hardware, device driver, or operating system. Further, the term "system configuration information" is construed broadly to include not only information related to the dependencies among plural components that configure the system, but also information capable of deriving relations useful for failure analysis, such as the relation of connection in communication, and the relation between subject and object of operations in accordance with commands or instructions. This makes it easy to create a topology diagram of components.

Further, log information and/or failure information is collected in a unified data format, and this makes it easy to display and analyze events included in the log information and/or failure information, allowing candidate events to be identified more easily.

Furthermore, the detection rules can be easily updated according to the events the selection of which has been accepted. This makes it possible to generate detection rules more adapted to the actual system configuration. Here, the term "topology" is a concept showing the relation of connection and dependency among components.

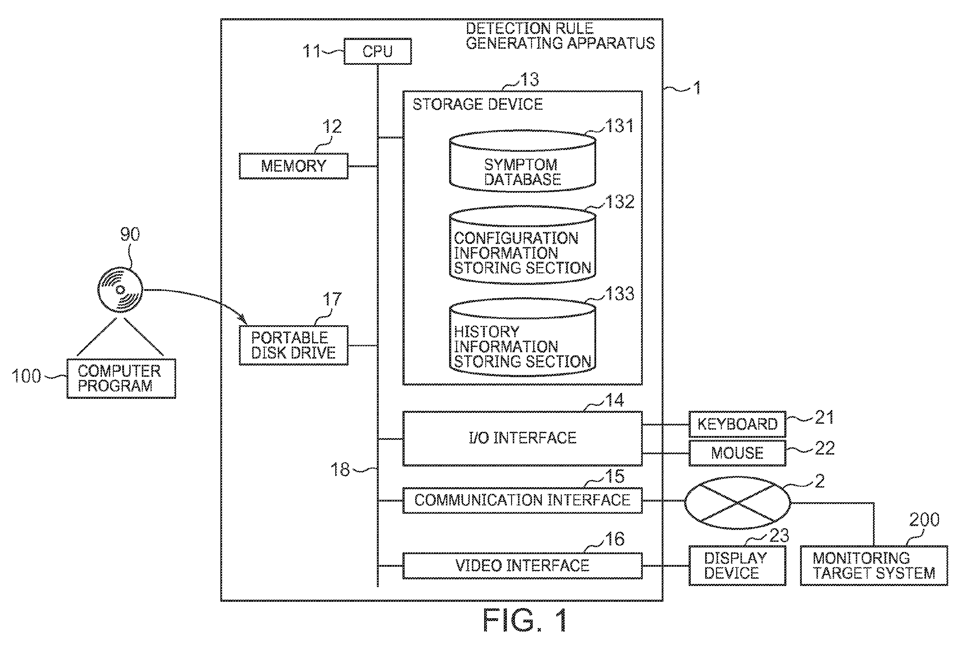

FIG. 1 is block diagram showing a configuration example of the detection rule generating apparatus according to the embodiment of the present invention. The detection rule generating apparatus 1 according to the embodiment of the present invention is configured to include at least a CPU (Central Processing Unit) 11, a memory 12, a storage device 13, an I/O interface 14, and a communication interface 15, a video interface 16, a portable disk drive 17, and an internal bus 18 for connecting the above-mentioned hardware components.

The CPU 11 is connected to each of the above-mentioned hardware components of the detection rule generating apparatus 1 through the internal bus 18. The CPU 11 not only controls the operation of the above-mentioned hardware components, but also executes various software functions according to a computer program 100 stored in the storage device 13. The memory 12 is configured as a volatile memory such as SRAM or SDRAM to store temporary data and the like generated at the time of executing the computer program 100 to load a load module.

The storage device 13 is configured as a built-in fixed storage device (hard disk), a ROM, or the like. The computer program 100 stored in the storage device 13 is downloaded from a portable recording medium 90, such as a DVD or CD-ROM, storing information such as the program and data through the portable disk drive 17, and loaded from the storage device 13 into the memory 12 at the time of execution. Of course, the computer program may be downloaded from an external computer connected to a network 2 through the communication interface 15.

Further, the storage device 13 includes a symptom database 131. A recommended action, a comment, and the like at the time of detecting a failure on the basis of each detection rule as well as a detection rule for detecting an event that has caused a failure are added to the symptom database 131. When a user selects one or more events that have caused a failure, a detection rule is extracted according to the selected events and displayed on a display device 23 together with a topology diagram of components.

The storage device 13 also includes a configuration information storing section 132 for storing system configuration information of a system as a monitoring target to determine whether a failure has occurred, and a history information storing section 133 for storing history information such as log information of the system as the monitoring target and event information output when a failure has occurred in the system. The configuration information storing section 132 consists of a CCMDB (Change and Configuration Management DB) including dependency information among components of a monitoring target system 200 to be monitored and related information of each component. The topology diagram of components can be displayed based on the system configuration information stored in the configuration information storing section 132. Although the configuration information storing section 132 may be included in the storage device 13, it is normally provided separately from the detection rule generating apparatus 1 according to the embodiment, e.g., it is provided in an external computer connected through the network 2.

The communication interface 15 is connected to the internal bus 18 so that it can exchange data with the external computer or the like by being connected to the external network 2 such as the Internet, LAN, or WAN. The communication interface 15 is also connected to the monitoring target system 200 through the network 2, making it possible to acquire the system configuration information, the history information at the time of occurrence of a failure, and the like.

The I/O interface 14 is connected to data input media such as a keyboard 21 and a mouse 22 to receive data input. The video interface 16 is connected to the display device 23, such as a CRT monitor or an LCD, to display certain images.

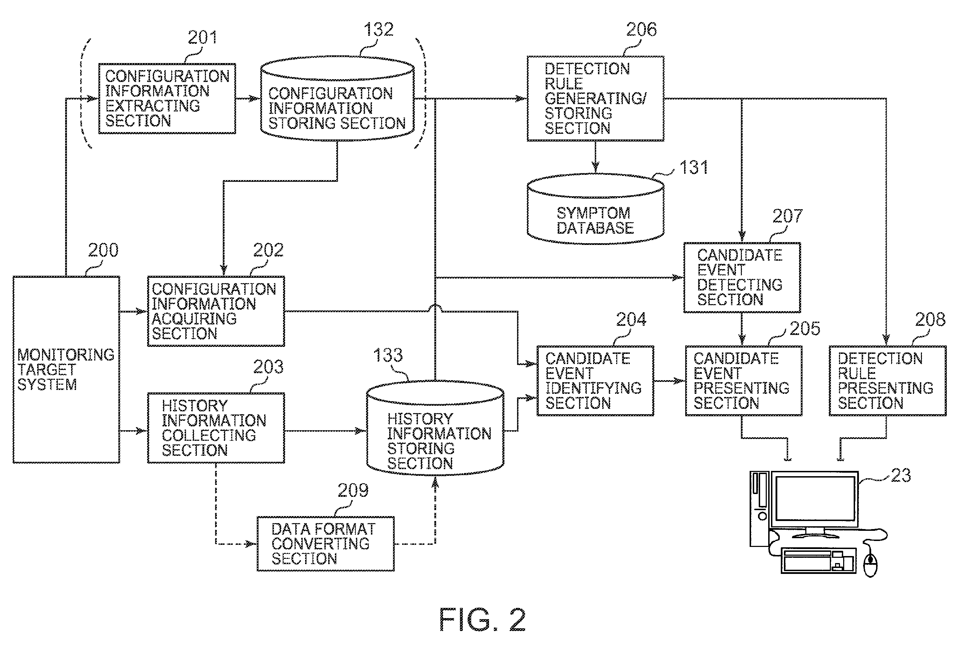

FIG. 2 is a functional block diagram upon detection rule generation by the detection rule generating apparatus 1 according to the embodiment of the present invention. A configuration information extracting section 201 extracts the system configuration information including related information among components included in the monitoring target system 200, and stores it in the configuration information storing section 132. The system configuration information including the related information among components include, for example, information on the relation of connection among components in communication, link related information related to an operating/operated relationship, etc. Note that the configuration information extracting section 201 is not a structural element indispensable to the present invention, and the system configuration information may be generated beforehand in the configuration information storing section 132, or the configuration information extracting section 201 may not be incorporated in the detection rule generating apparatus 1. In other words, the configuration information extracting section 201 and the configuration information storing section 132 are not structural elements indispensable to the detection rule generating apparatus 1 according to the embodiment of the present invention.

A configuration information acquiring section 202 acquires the system configuration information stored in the configuration information storing section 132. The system configuration information is stored in the configuration information storing section 132 in association with each monitoring target system 200, and the configuration information acquiring section 202 acquires corresponding system configuration information according to the monitoring target system 200.

A history information collecting section 203 monitors the monitoring target system 200 at all times, collects history information including log information output from each component included in the monitoring target system 200 and/or failure information such as event information output upon occurrence of a failure, and stores the history information in the history information storing section 133. The log information is not limited to system logs output at all times, and it may include message information output by interrupt processing or the like at the time of failure occurrence.

Note that the pieces of history information collected in the history information collecting section 203 often have different formats so that they may not be used as they are as basic information for identifying candidate events. Therefore, it is desirable to include a data format converting section 209 to convert the pieces of history information into a standard unified data format and store them in the history information storing section 133.

A candidate event identifying section 204 identifies candidate events, to be selected as candidates for generating a detection rule for detecting an event causing a failure, based on the system configuration information acquired by the configuration information acquiring section 202 and the history information stored in the history information storing section 133.

A candidate event presenting section 205 presents the identified candidate events on the display device 23. This allows the user to select an optimal event from the presented candidate events and generate a detection rule accurately.

On the other hand, a detection rule generating/storing section 206 generates a detection rule based on the system configuration information including the component from which the selected event has been sent, and stores it in the symptom database 131. A candidate event detecting section 207 presents, on the display device 23 through the candidate event presenting section 205, a candidate event to be selected next based on the generated detection rule and the stored history information. This allows the user to select a more optimal event and generate the detection rule more accurately. A detection rule presenting section 208 presents, on the display device 23, a detection rule to be updated by selecting a candidate event.

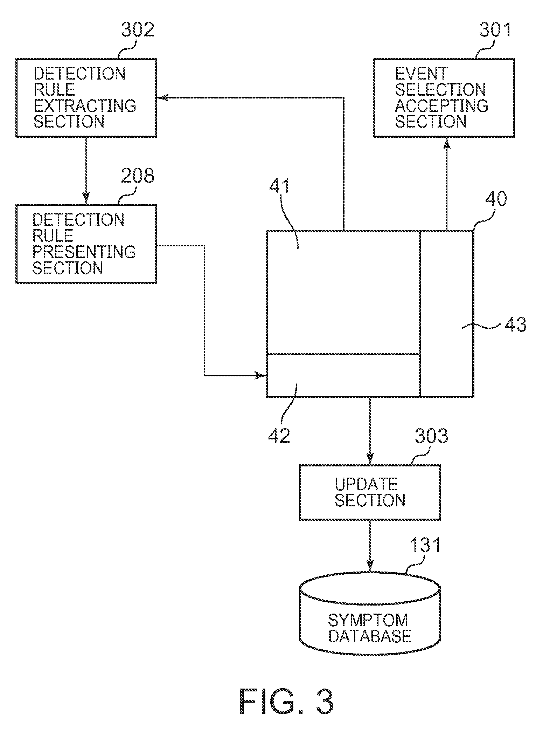

FIG. 3 is a functional block diagram upon updating a detection rule by the detection rule generating apparatus 1 according to the embodiment of the present invention. A event selection accepting section 301 accepts user's selection of at least one event from an event list displayed on the display device 23. The event may be selected using a pointing device such as the mouse 22 or by key input through the keyboard 21.

A detection rule extracting section 302 extracts a detection rule according to a topology including one or more components corresponding to the at least one event the selection of which has been accepted. The extracted detection rule is presented as part of a screen 40 on the display device 23 through the detection rule presenting section 208. The details of the display screen will be described later. An update section 303 accepts updating of the detection rule presented on the display device 23 and updates the symptom database 131.

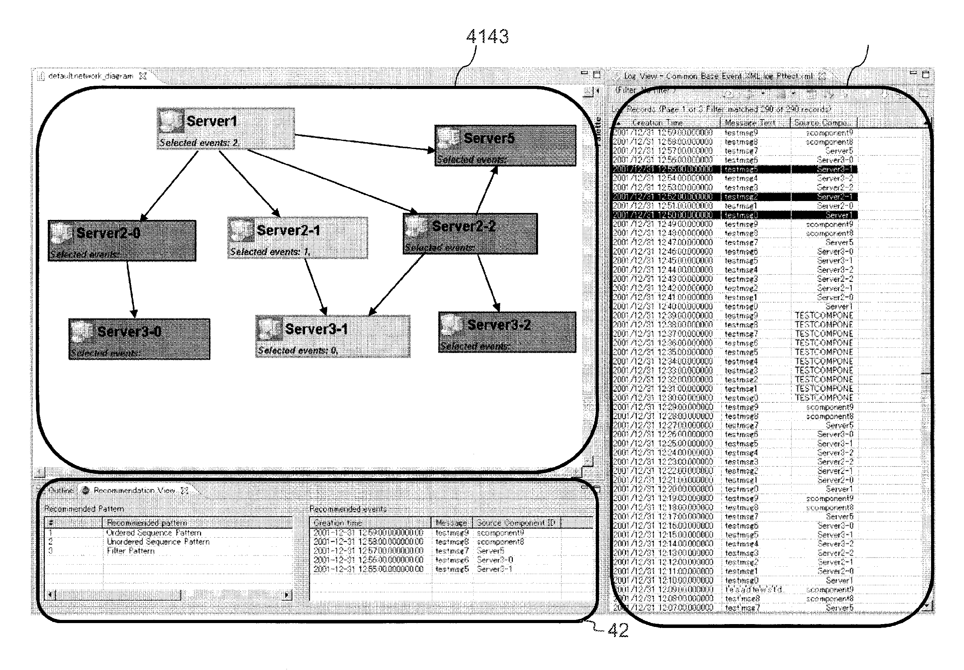

FIG. 4 is an illustration of the screen 40 displayed on display device 23. Displayed in a topology diagram displaying area 41 is a topology diagram showing dependencies among components included in the monitoring target system 200. In a recommended information displaying area 42, both recommended detection rules and recommended additional events are displayed.

In an event list displaying area 43, events included in the monitoring target system 200 is listed. When the event selection accepting section 301 accepts the selection of candidate events from the events displayed in the event list displaying area 43, the candidate events the selection of which has been accepted and events having dependencies are highlighted. In FIG. 4, the candidate events the selection of which has been accepted and an event having dependency are displayed by changing the display color. The highlighting method is not particularly limited to the change in display color, and brightness may be changed.

The detection rules extracted by the detection rule extracting section 302 are displayed in the recommended information displaying area 42 in order of priority. Then, if any of the displayed detection rules is selected using the pointing device such as the mouse 22, the topology diagram displayed in the topology diagram displaying area 41 is changed.

The recommended additional events are also displayed in the recommended information displaying area 42. Therefore, when an additional event is selected through the update section 303 using the pointing device such as the mouse 22, the additional event is added to the topology diagram displayed in the topology diagram displaying area 41 so that the symptom database 131 will be updated.

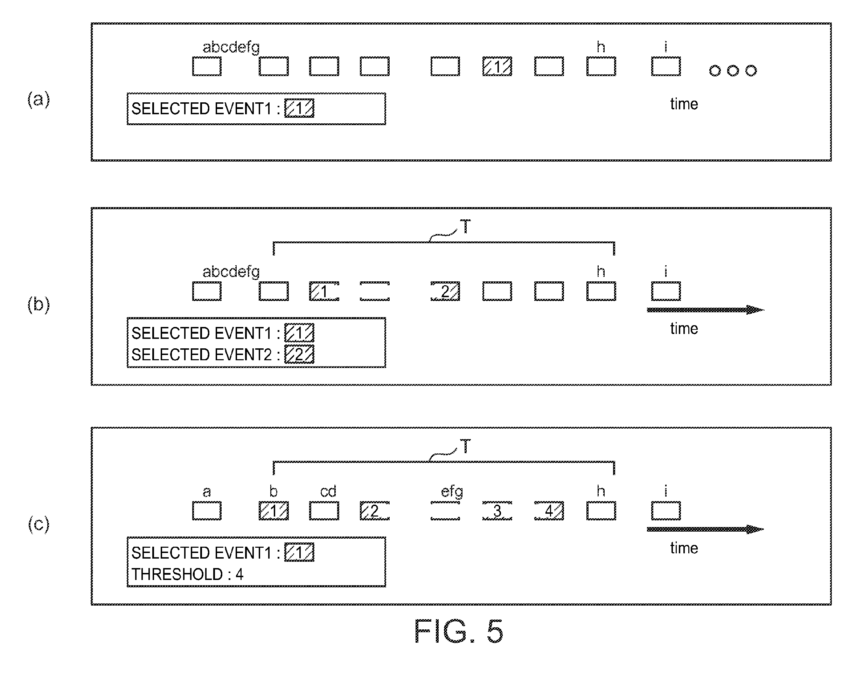

FIG. 5 is an illustration of typical rule patterns of the generated detection rules. FIG. 5(a) illustrates a filter pattern, FIG. 5(b) illustrates a sequence pattern, and FIG. 5(c) illustrates a threshold pattern, respectively.

As shown in FIG. 5(a), the filter pattern is a detection rule for checking whether an individual event matches each of the events the selection of which has been accepted. This is an effective detection rule when there is one event the selection of which has been accepted. In FIG. 5(a), it is confirmed that event f among event a to event i is selected as selected event '1'.

As shown in FIG. 5(b), the sequence pattern is a detection rule for detecting the presence or absence of a sequence of events. This is an effective detection rule when there are plural events the selection of which has been accepted. In FIG. 5(b), it is confirmed that event c corresponding to selected event '1' and event e corresponding to selected event '2' exist in this order among events existing within a certain fixed period T.

As shown in FIG. 5(c), the threshold pattern is a detection rule for comparing a certain numerical value with a threshold. This is an effective detection rule when there are plural events the selection of which has been accepted. In FIG. 5(c), events b, d, f, and g corresponding to selected event '1' from among events a to event i are counted. The events hatched in FIG. 5(c) are events corresponding to selected event '1' within the certain fixed period T. Here, since the threshold is set to 'four' events, it can be confirmed that events are selected in a range equal to or greater than the threshold.

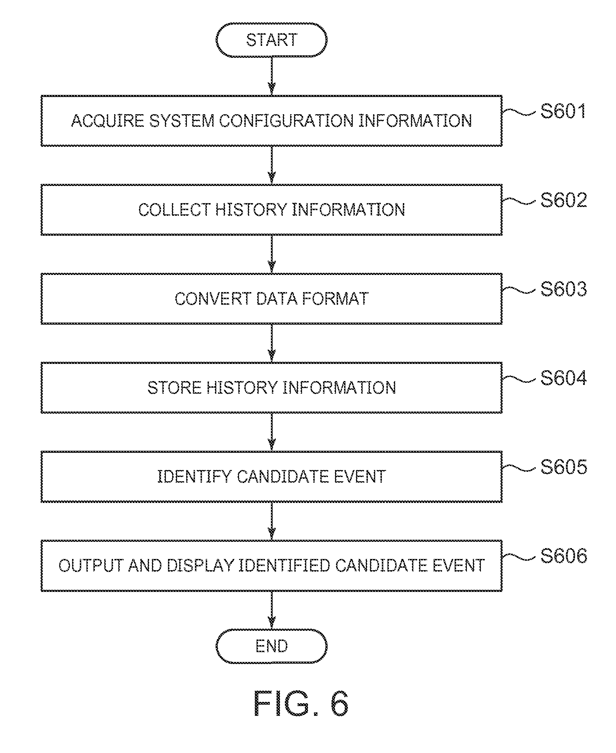

FIG. 6 is a flowchart showing a procedure of detection rule generating processing by the CPU 11 of the detection rule generating apparatus 1 according to the embodiment of the present invention. First, the detection rule generating apparatus 1 acquires system configuration information including related information among components included in the monitoring target system 200 (step S601). Of course, the system configuration information may be acquired beforehand and prestored in the configuration information storing section 132.

The CPU 11 of the detection rule generating apparatus 1 monitors the monitoring target system 200 at all times, collects history information including log information output from each component included in the monitoring target system 200 and/or failure information such as event information output upon occurrence of a failure (step S602), converts the data format to a standard unified data format (step S603), and stores the history information in the history information storing section 133 of the storage device 13 (step S604). The log information is not limited to system logs output at all times, and it may include message information output by interrupt processing at the time of failure occurrence.

The CPU 11 identifies candidate events, to be selected as candidates for generating a detection rule, based on the system configuration information stored in the configuration information storing section 132 and the history information stored in the history information storing section 133, both sections included in the storage device 13 (step S605). Then, the CPU 11 outputs and displays the identified candidate events on the display device 23 (step S606).

The method of identifying the candidate events based on the system configuration information stored in the configuration information storing section 132 and the history information stored in the history information storing section 133, both sections included in the storage device 13, is not particularly limited. Here, the procedure of candidate event identifying processing when the detection rules are the rule patterns shown in FIG. 5 will be specifically described with reference to the accompanying drawings.

Among the rule patterns of the detection rules, the sequence pattern is further classified into two kinds of rule patterns. In other words, an ordered sequence pattern means a sequence pattern the order of which is identified, and an unordered sequence pattern means a sequence pattern the order of which is not identified.

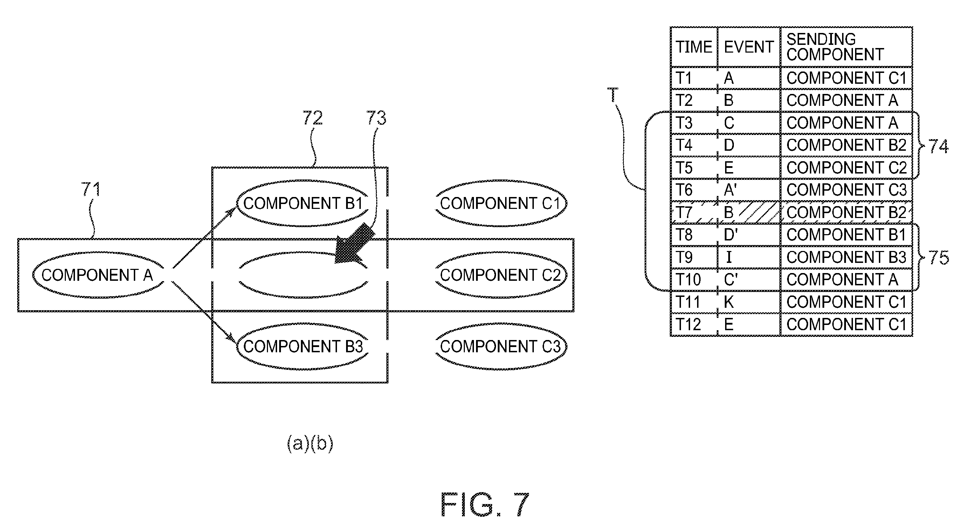

FIG. 7 is an illustration of candidate events when the filter pattern is selected from the detection rules. FIG. 7(a) illustrates a topology diagram displayed in the topology diagram displaying area 41. FIG. 7(b) illustrates events displayed in the event list displaying area 43.

As shown in FIG. 7(a), if an event whose selection by the user has been accepted is component B2 indicated by arrow 73, event B the selection of which has been accepted through the component B2 displayed in the event list displaying area 43 is highlighted. In FIG. 7(b), event B the selection of which has been accepted through the component B2 is indicated by hatching.

Then, from the topology diagram of FIG. 7(a), components A and C2 are selected as close components 71 close to and having dependencies with the component B2. Therefore, events existing within the certain fixed period T and corresponding to the selected components A and C2 become candidate events. Further, components B1, B2, and B3 are selected as the same kind of components 72 that are in a parallel relationship with the component B2. Therefore, events existing within the certain fixed period T and corresponding to the selected components B1, B2, and B3 become candidate events. Thus, events C, D, E, D', I, and C' are identified as candidate events corresponding to sending component groups 74 and 75 shown in FIG. 7(b).

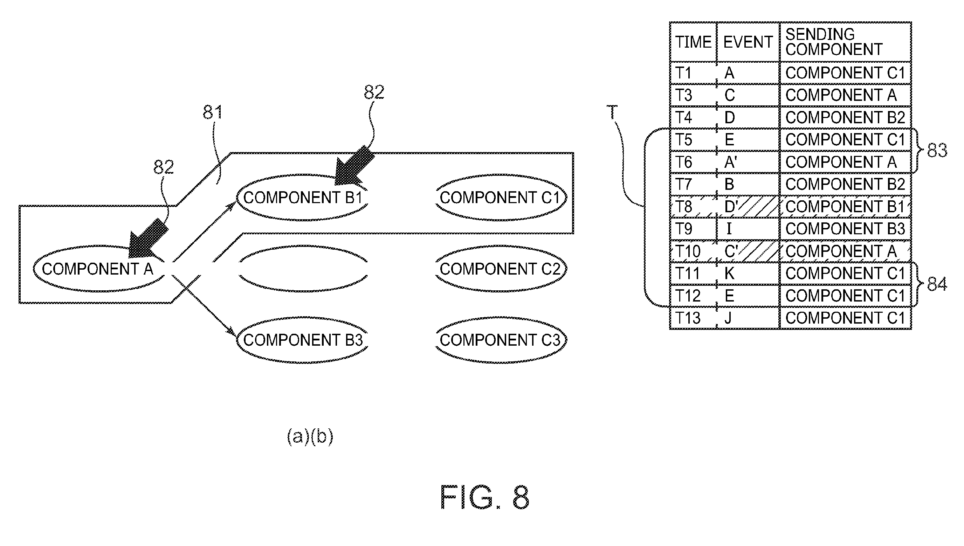

FIG. 8 is an illustration of candidate events when the ordered sequence pattern is selected from the detection rules. FIG. 8(a) illustrates a topology diagram displayed in the topology diagram displaying area 41. FIG. 8(b) illustrates events displayed in the event list displaying area 43.

As shown in FIG. 8(a), if events whose selection by the user has been accepted are components A and B1 indicated by arrows 82, 82, event C' the selection of which has been accepted through the component A, and event D' the selection of which has been accepted through the component B1, both components displayed in the event list displaying area 43, are highlighted. In FIG. 8(b), both events the selection of which has been accepted are indicated by hatching.

Then, from the topology diagram of FIG. 8(a), components A, B1, and C1 are selected as component group 81 having a serial relationship with the components A and B1. Therefore, events existing within the certain fixed period T and corresponding to the selected components A, B1, and C1 become candidate events. Thus, events E, A', K, and E are identified as candidate events corresponding to sending component groups 83 and 84 shown in FIG. 8(b).

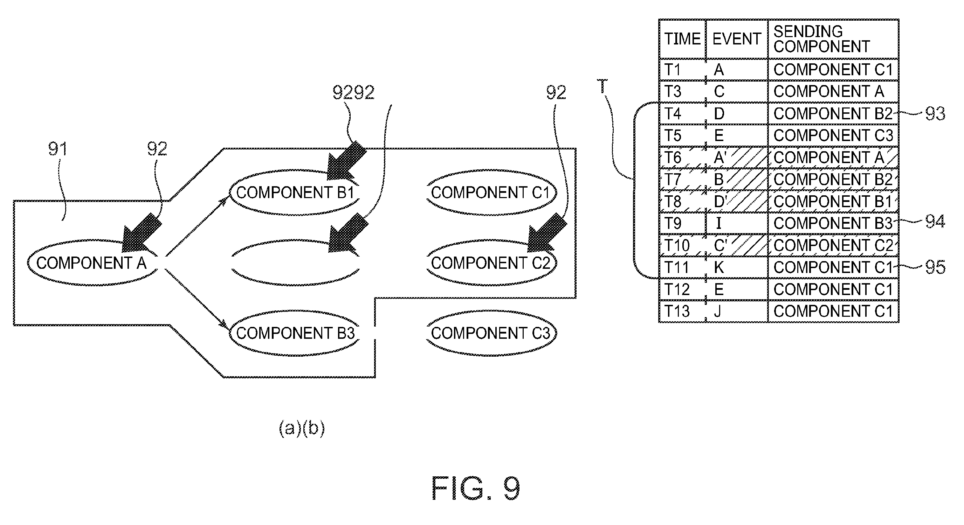

FIG. 9 is an illustration of candidate events when the unordered sequence pattern is selected from the detection rules. FIG. 9(a) illustrates a topology diagram displayed in the topology diagram displaying area 41. FIG. 9(b) illustrates events displayed in the event list displaying area 43.

As shown in FIG. 9(a), if events whose selection by the user has been accepted are components A, B1, B2, and C2 indicated by arrows 92, 92, ..., event A' the selection of which has been accepted through the component A, event D' the selection of which has been accepted through the component B1, event B the selection of which has been accepted through the component B2, and event C' the selection of which has been accepted through the component C2, all components displayed in the event list displaying area 43, are highlighted. In FIG. 9(b), the event group the selection of which has been accepted is indicated by hatching.

Then, from the topology diagram of FIG. 9(a), components A, B1, B2, B3, C1, and C2 are selected as component group 91 having a serial or partial serial relationship with the components A, B1, B2, and C2. Therefore, events existing within the certain fixed period T and corresponding to the selected components A, B1, B2, B3, C1, and C2 become candidate events. Thus, events D, I, and K are identified as candidate events corresponding to sending components 93, 94, and 95 shown in FIG. 9(b).

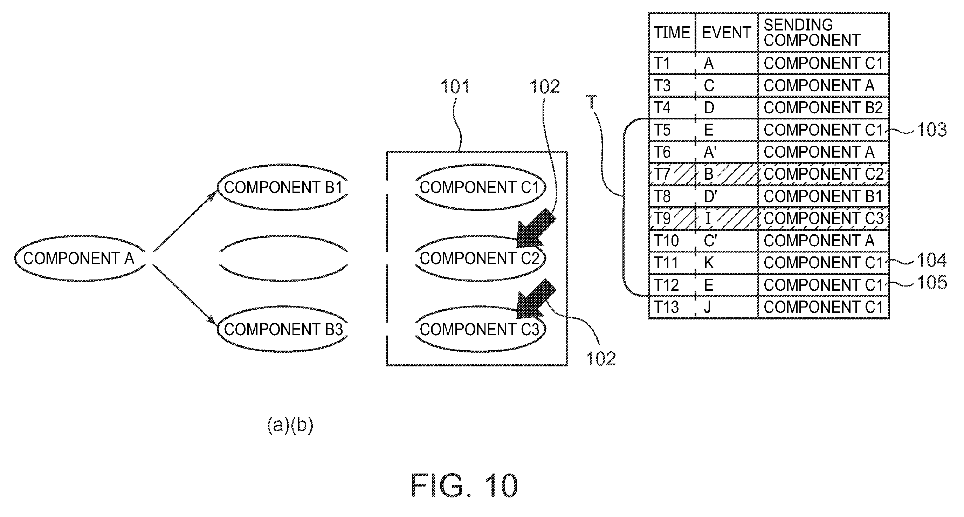

FIG. 10 is an illustration of candidate events when the threshold pattern is selected from the detection rules. FIG. 10(a) illustrates a topology diagram displayed in the topology diagram displaying area 41. FIG. 10(b) illustrates events displayed in the event list displaying area 43.

As shown in FIG. 10(a), if events whose selection by the user has been accepted are components C2 and C3 indicated by arrows 102, 102, event B the selection of which has been accepted through the component C2, and event I the selection of which has been accepted through the component C3, both components displayed in the event list displaying area 43, are highlighted. In FIG. 10(b), both events the selection of which has been accepted are indicated by hatching.

Then, from the topology diagram of FIG. 10(a), components C1, C2, and C3 are selected as component group 101 having the parallel relationship with the components C2 and C3. Therefore, events existing within the certain fixed period T and corresponding to the selected components C1, C2, and C3 become candidate events. Thus, events E, K, E are identified as candidate events corresponding to sending components 103, 104, and 105 shown in FIG. 10(b).

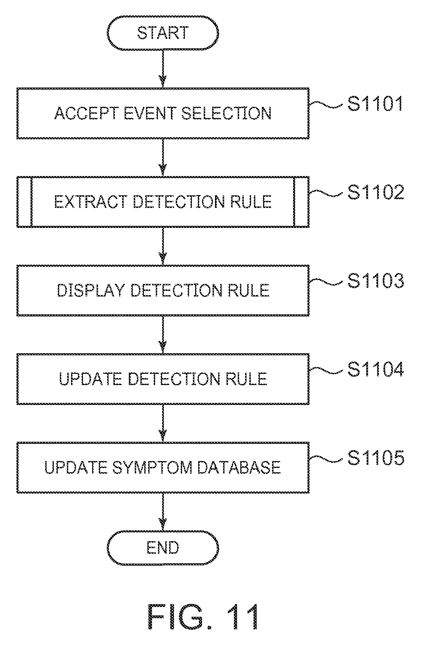

FIG. 11 is a flowchart showing a procedure of detection rule update processing by the CPU 11 of the detection rule generating apparatus 1 according to the embodiment of the present invention. The CPU 11 of the detection rule generating apparatus 1 accepts user's event selection (step S1101). The user's event selection may be made using a pointing device such as the mouse 22, or by key input through the keyboard 21.

The CPU 11 extracts a detection rule according to a topology including one or more components corresponding to the event or events the selection of which has been accepted (step S1102). The CPU 11 displays the extracted detection rule on the display device 23 (step S1103). Then, the updating of the detection rule is accepted (step S1104), and the symptom database 131 is updated (step S1105).

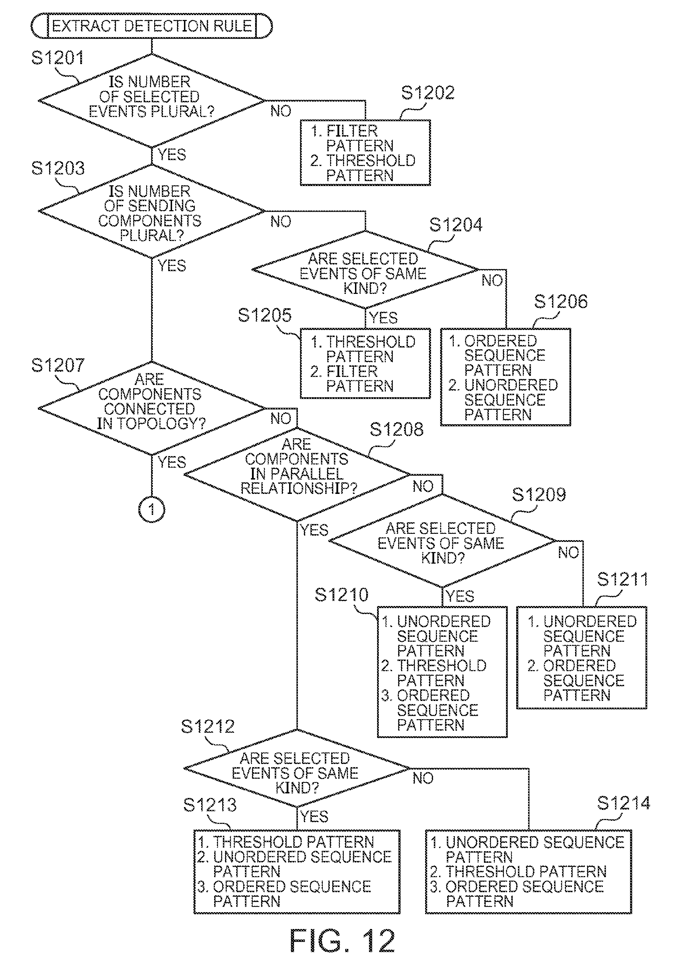

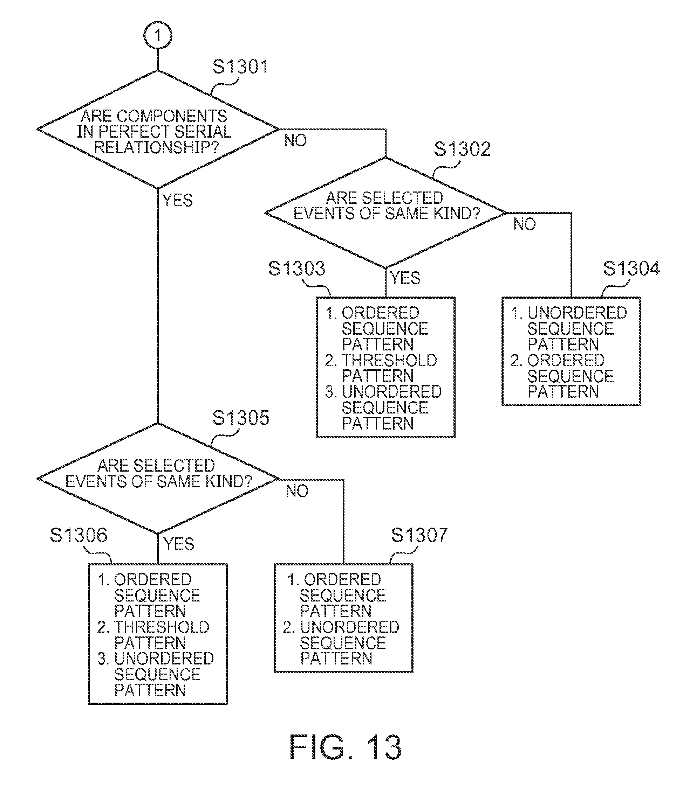

Although the method of extracting a detection rule is not particularly limited, a rule pattern recommended according to the selected event and the topology is identified to a certain extent. FIG. 12 and FIG. 13 are flowcharts showing a procedure of detection rule extracting processing by the CPU 11 of the detection rule generating apparatus 1 according to the embodiment of the present invention.

In FIG. 12, the CPU 11 of the detection rule generating apparatus 1 determines whether the number of selected events the selection of which has been accepted is plural (step S1201). If determining that the number of selected events is singular (NO in step S1201), the CPU 11 gives priority to extraction of the filter pattern (step S1202). It is, of course, understood that the threshold pattern may be extracted though it is exceptional.

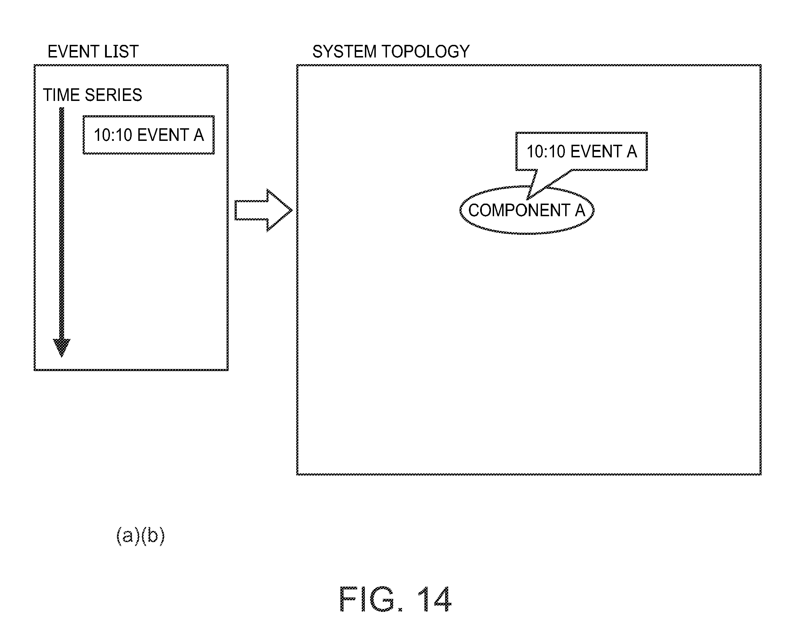

FIG. 14 is an illustration of a topology when the number of selected events is singular. FIG. 14(a) illustrates an event including the event occurrence time. FIG. 14(b) illustrates a topology diagram including the event occurrence time.

In FIG. 14, since event A sent out from component A occurred alone at 10:10, extraction of detection rules other than checking the presence of the event and counting the number of events is unthinkable. Therefore, extraction of the filter pattern as the detection rule is given priority, and the threshold pattern is extracted only exceptionally.

Returning to FIG. 12, if determining that the number of selected events is plural (YES in step S1201), the CPU 11 of the detection rule generating apparatus 1 then determines whether the number of components from which plural selected events have been sent out is plural (step S1203). If determining that the number of components that has sent out the plural events is singular (NO in step S1203), the CPU 11 then determines whether the selected events are of the same kind (step S1204).

If determining that the selected events are of the same kind (YES in step S1204), the CPU 11 gives priority to extraction of the threshold pattern as the detection rule (step S1205). It is, of course, understood that the filter pattern may be extracted though it is exceptional.

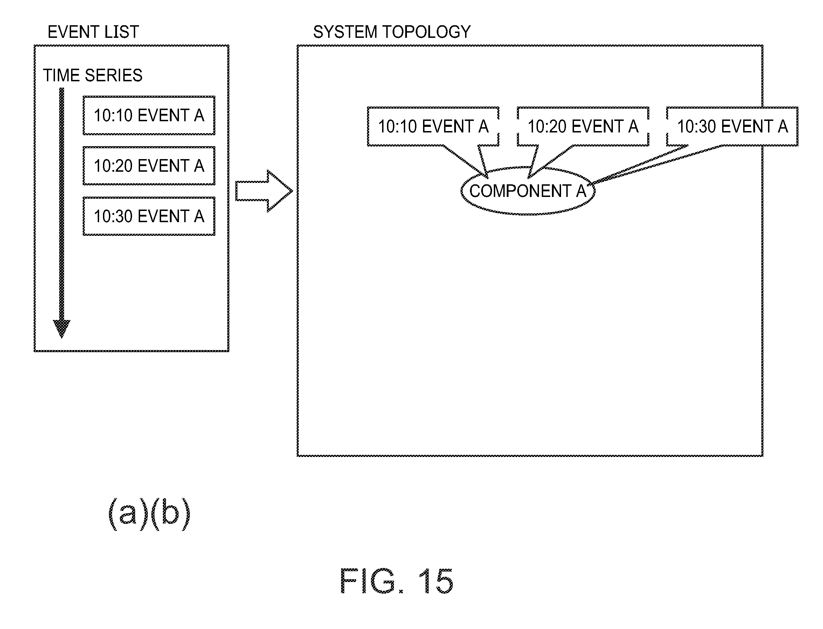

FIG. 15 is an illustration of a topology when the number of selected events is plural and the selected events are of the same kind. FIG. 15(a) illustrates events including the event occurrence times. FIG. 15(b) illustrates a topology diagram including the event occurrence times.

In FIG. 15, since event A sent out from component A occurred three times at 10:10, 10:20, and 10:30, respectively, extraction of detection rules other than counting the number of events and checking the presence of the events is unthinkable. Therefore, the extraction of the threshold pattern as the detection rule is given priority, and the filter pattern is extracted only exceptionally.

Returning to FIG. 12, if determining that the selected events are of plural kinds (NO in step S1204), the CPU 11 of the detection rule generating apparatus 1 extracts a sequence pattern as the detection rule (step S1206). In this case, either the ordered sequence pattern or the unordered sequence pattern may be extracted on a priority basis according to the presence or absence of ordering of selected events. However, since the selected events are different from each other, it is preferable to given priority to the extraction of the ordered sequence pattern.

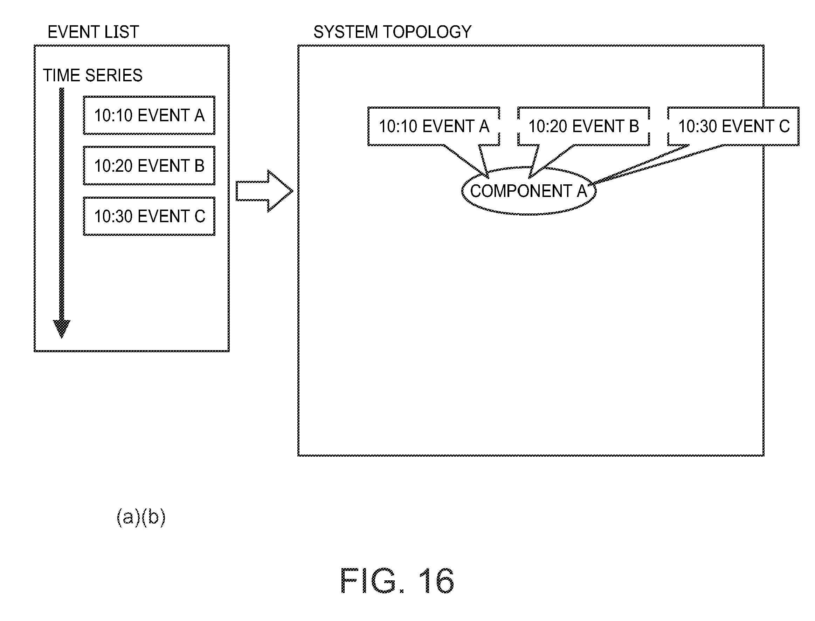

FIG. 16 is an illustration of a topology when the number of selected events is plural and the selected events are of plural kinds. FIG. 16(a) illustrates events including the event occurrence times. FIG. 16(b) illustrates a topology diagram including the event occurrence times.

In FIG. 16, since three kinds of events A, B, and C occurred at 10:10, 10:20, 10:30, respectively, only the detection rule that considers the order of occurrence of events can be extracted. Therefore, a sequence pattern is extracted as the detection rule.

Returning to FIG. 12, if determining that the number of sending components is plural (YES in step S1203), the CPU 11 of the detection rule generating apparatus 1 then determines whether the components are connected in a topology (step S1207). If determining that the components are not connected in the topology (NO in step S1207), the CPU 11 then determines whether the relation of connection among components is the parallel relationship (step S1208).

If determining that the relation of connection among components is not the parallel relationship (NO in step S1208), the CPU 11 then determines whether the selected events are of the same kind (step S1209). If determining that the selected events are of the same kind (YES in step S1209), the CPU 11 extracts the unordered sequence pattern as the detection rule (step S1210). It is, of course, understood that the threshold pattern may be extracted though it is exceptional, or the ordered sequence pattern may be extracted depending on the situation.

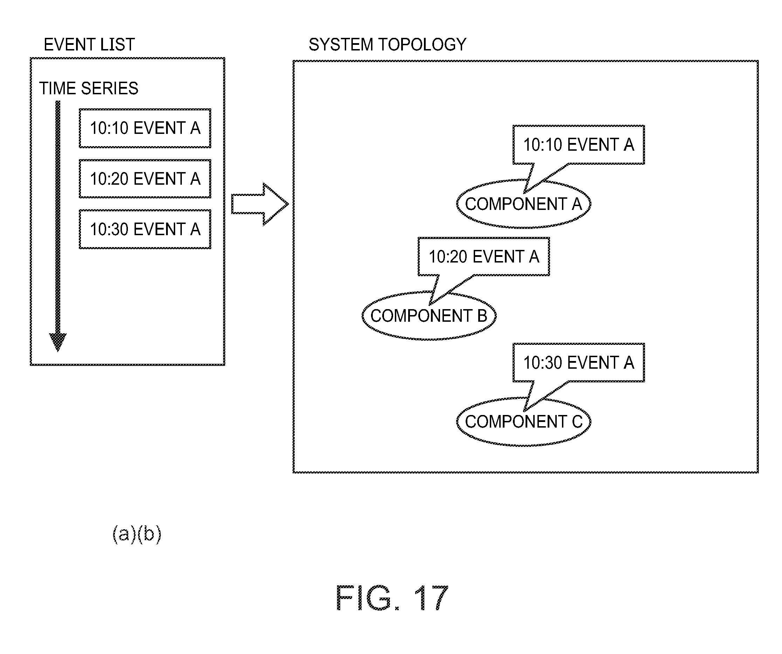

FIG. 17 is an illustration of a topology when the number of selected events is plural, the relationship among components is uncorrelated, and the selected events are of the same kind. FIG. 17(a) illustrates events including the event occurrence times. FIG. 17(b) illustrates a topology diagram including the event occurrence times.

In FIG. 17, since the same event A from three components A, B, and C occurred at 10:10, 10:20, and 10:30, respectively, it is preferable to detect a sequence of events that are in random order. Therefore, it is preferable to give priority to extraction of the unordered sequence pattern as the detection rule.

Returning to FIG. 12, if determining that the selected events are of plural kinds (NO in step S1209), the CPU 11 of the detection rule generating apparatus 1 extracts a sequence pattern as the detection rule (step S1211). In this case, either the ordered sequence pattern or the unordered sequence pattern may be extracted on a priority basis according to the presence or absence of ordering of selected events. However, since the components are in neither the serial nor parallel relationship, it is preferable to give priority to extraction of the unordered sequence pattern.

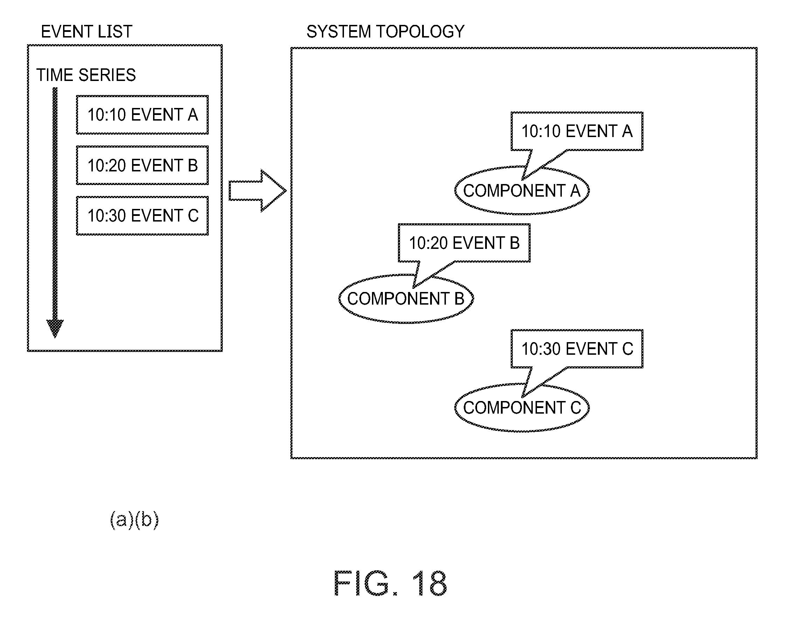

FIG. 18 is an illustration of a topology when the number of selected events is plural, the relationship among components is uncorrelated, and the selected events are of plural kinds. FIG. 18(a) illustrates events including the event occurrence times. FIG. 18(b) illustrates a topology diagram including the event occurrence times.

In FIG. 18, since different events A, B, and C from three components A, B, and C occurred at 10:10, 10:20, 10:30, respectively, it is preferable to detect a sequence of events that are in random order. Therefore, it is preferable to give priority to extraction of the unordered sequence pattern as the detection rule.

Returning to FIG. 12, if determining that the relation of connection among components is the parallel relationship (YES in step S1208), the CPU 11 of the detection rule generating apparatus 1 then determines whether the selected events are of the same kind (step S1212). If determining that the selected events are of the same kind (YES in step S1212), the CPU 11 extracts the threshold pattern as the detection rule (step S1213). It is, of course, understood that the unordered sequence pattern may be extracted though it is exceptional, or the ordered sequence pattern may be extracted depending on the situation.

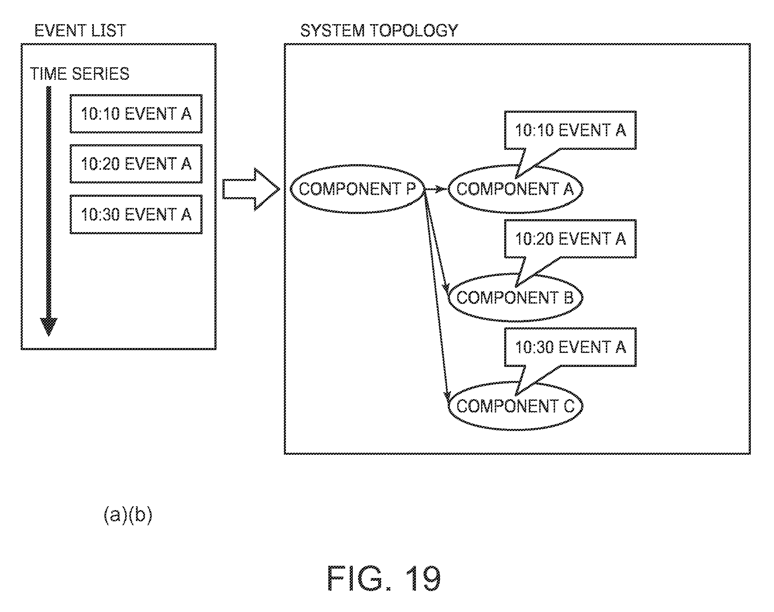

FIG. 19 is an illustration of a topology when the number of selected events is plural, the relationship among components is the parallel relationship, and the selected events are of the same kind. FIG. 19(a) illustrates events including the event occurrence times. FIG. 19(b) illustrates a topology diagram including the event occurrence times.

In FIG. 19, since event A from three components A, B, and C connected to component P and being in the parallel relationship occurred at 10:10, 10:20, and 10:30, respectively, it is preferable to detect a sequence of events that are in random order. Therefore, it is preferable to give priority to extraction of the unordered sequence pattern as the detection rule.

Returning to FIG. 12, if determining that the selected events are of plural kinds (NO in step S1212), the CPU 11 of the detection rule generating apparatus 1 extracts the unordered sequence pattern as the detection rule (step S1214). It is, of course, understood that the threshold pattern may be extracted though it is exceptional, or the ordered sequence pattern may be extracted depending on the situation.

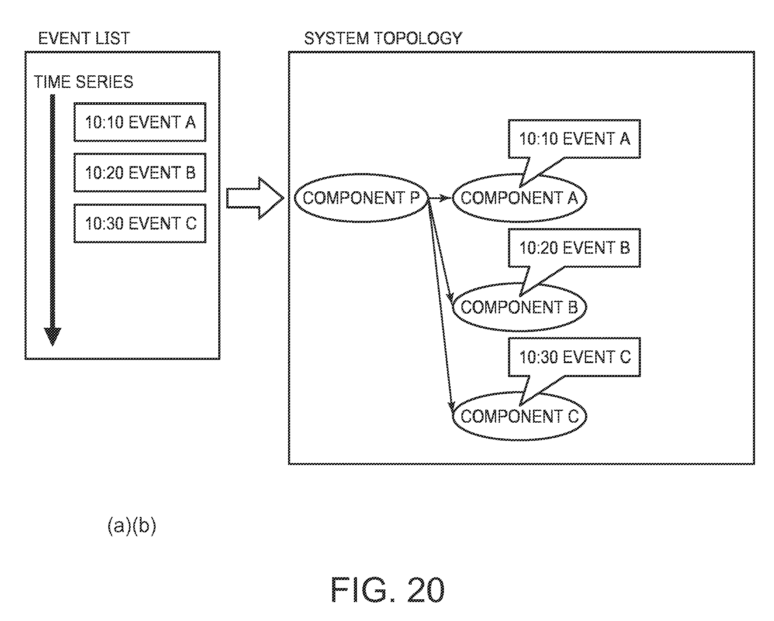

FIG. 20 is an illustration of a topology when the number of selected events is plural, the relationship among components is the parallel relationship, and the selected events are of plural kinds. FIG. 20(a) illustrates events including the event occurrence times. FIG. 20(b) illustrates a topology diagram including the event occurrence times.

In FIG. 20, since different events A, B, and C from three components A, B, and C connected to component P and being in the parallel relationship occurred at 10:10, 10:20, and 10:30, respectively, it is preferable to count the number of events rather than to detect a sequence of events. Therefore, it is preferable to give priority to extraction of the threshold pattern as the detection rule.

Returning to FIG. 12, if determining that the components are connected in the topology (YES in step S1207), the CPU 11 of the detection rule generating apparatus 1 then determines whether the components are in a perfect serial relationship as shown in FIG. 13 (step S1301). If determining that the components are not in the perfect serial relationship (NO in step S1301), the CPU 11 then determines whether the selected events are of the same kind (step S1302).

If determining that the selected events are of the same kind (YES in step S1302), the CPU 11 extracts the ordered sequence pattern as the detection rule (step S1303). It is, of course, understood that the threshold pattern may be extracted though it is exceptional, or the unordered sequence pattern may be extracted depending on the situation.

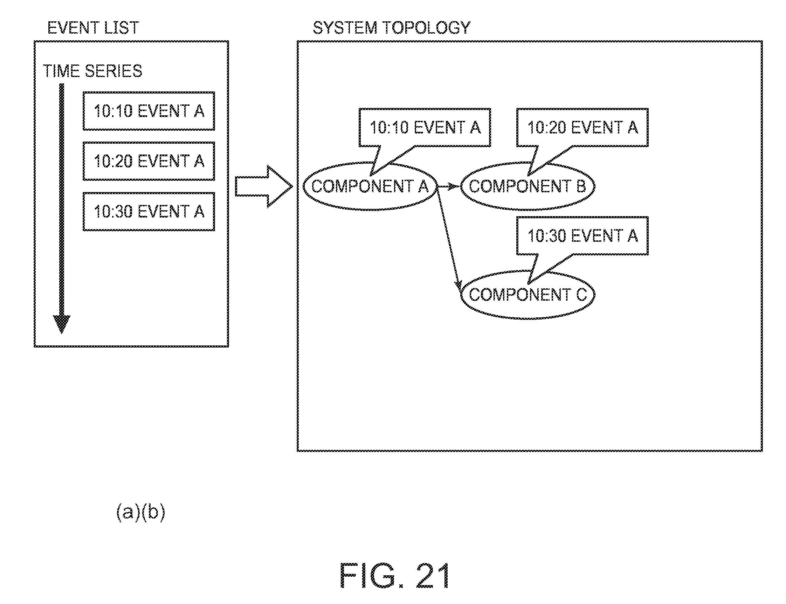

FIG. 21 is an illustration of a topology when the number of selected events is plural, the relationship among components is not the perfect serial relationship, and the selected events are of the same kind. FIG. 21(a) illustrates events including the event occurrence times. FIG. 21(b) illustrates a topology diagram including the event occurrence times.

In FIG. 21, since event A from component A and components B, C connected to component A and being in the parallel relationship occurred at 10:10, 10:20, and 10:30, respectively, it is preferable to detect a sequence of events, rather than to count the number of events, even if they are in random order. Therefore, it is preferable to give priority to extraction of the unordered sequence pattern as the detection rule.

Returning to FIG. 13, if determining that the selected events are of plural kinds (NO in step S1302), the CPU 11 of the detection rule generating apparatus 1 extracts a sequence pattern as the detection rule (step S1304). In this case, either the ordered sequence pattern or the unordered sequence pattern may be extracted on a priority basis according to the presence or absence of ordering of selected events. However, since the components are not in the perfect serial relationship, it is preferable to give priority to extraction of the unordered sequence pattern.

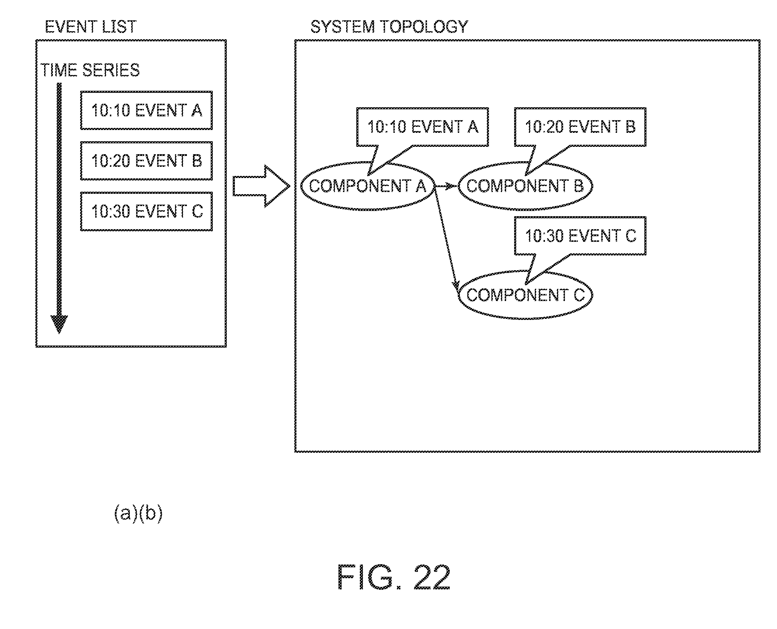

FIG. 22 is an illustration of a topology when the number of selected events is plural, the relationship among components is not the perfect serial relationship, and the selected events are of plural kinds. FIG. 22(a) illustrates events including the event occurrence times. FIG. 22(b) illustrates a topology diagram including the event occurrence times.

In FIG. 22, since different events A, B, and C from component A and components B, C connected to component A and being in the parallel relationship occurred at 10:10, 10:20, and 10:30, respectively, it is preferable to detect a sequence of events even if they are in random order. Therefore, it is preferable to give priority to extraction of the unordered sequence pattern as the detection rule.

Returning to FIG. 13, if determining that the components are in the perfect serial relationship (YES in step S1301), the CPU 11 of the detection rule generating apparatus 1 then determines whether the selected events are of the same kind (step S1305). If determining that the selected events are of the same kind (YES in step S1305), the CPU 11 extracts the ordered sequence pattern as the detection rule (step S1306). It is, of course, understood that the threshold pattern may be extracted though it is exceptional, or the unordered sequence pattern may be extracted depending on the situation.

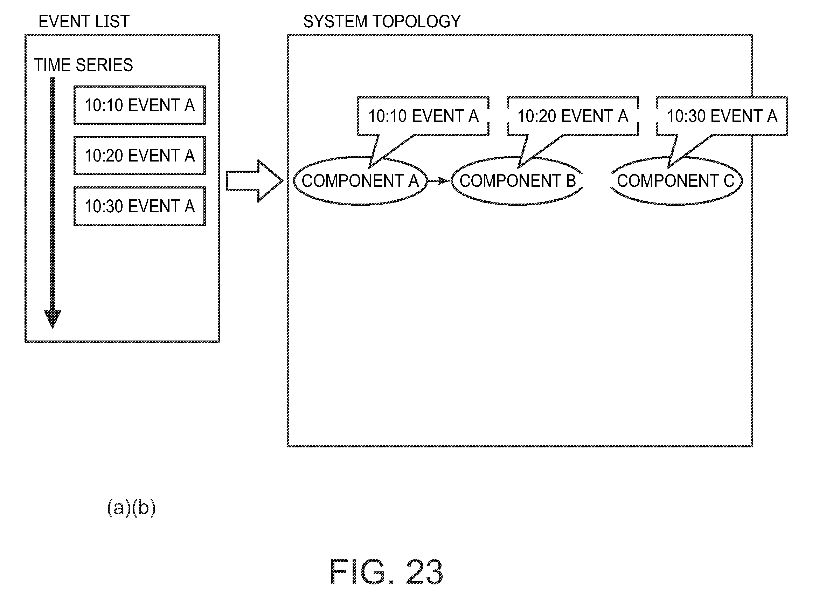

FIG. 23 is an illustration of a topology when the number of selected events is plural, the relationship among components is the perfect serial relationship, and the selected events are of the same kind. FIG. 23(a) illustrates events including the event occurrence times. FIG. 23(b) illustrates a topology diagram including the event occurrence times.

In FIG. 23, since event A from components A, B, and C in the serial relationship occurred at 10:10, 10:20, and 10:30, respectively, it is preferable to detect a sequence of ordered events. Therefore, it is preferable to give priority to extraction of the ordered sequence pattern as the detection rule.

Returning to FIG. 13, if determining that the selected events are of plural kinds (NO in step S1305), the CPU 11 of the detection rule generating apparatus 1 extracts a sequence pattern as the detection rule (step S1307). In this case, either the ordered sequence pattern or the unordered sequence pattern may be extracted on a priority basis according to the presence or absence of ordering of selected events. However, since the components are in the perfect serial relationship, it is preferable to give priority to extraction of the ordered sequence pattern.

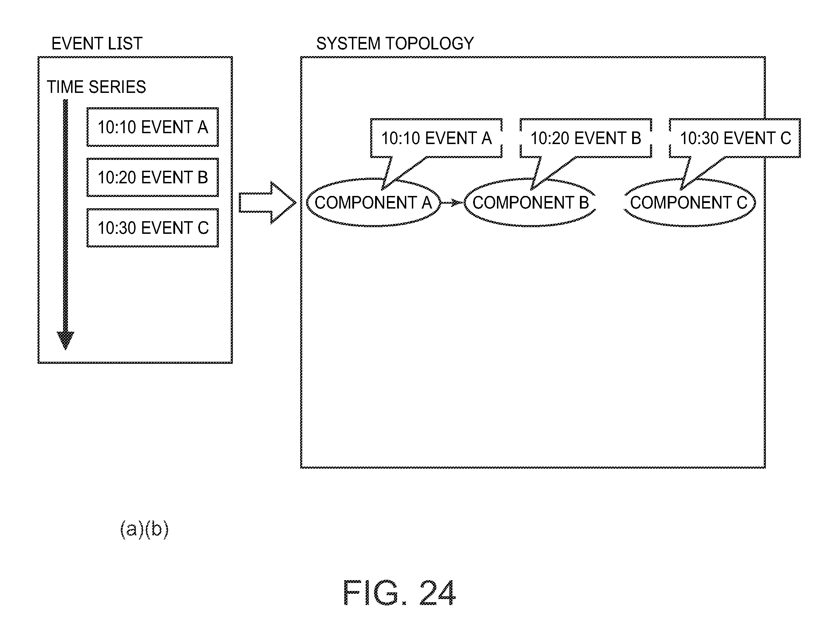

FIG. 24 is an illustration of a topology when the number of selected events is plural, the relationship among components is the perfect serial relationship, and the selected events are of plural kinds. FIG. 24(a) illustrates events including the event occurrence times. FIG. 24(b) illustrates a topology diagram including the event occurrence times.

In FIG. 24, since different events A, B, and C from components A, B, and C in the serial relationship occurred at 10:10, 10:20, and 10:30, respectively, it is preferable to detect the sequence of ordered events. Therefore, it is preferable to give priority to extraction of the ordered sequence pattern as the detection rule.

As described above, according to the embodiment, since related information among components is included in system configuration information, the detection rules for events causing failures can be generated to include not only the dependencies among components but also the related information. Further, candidate events are presented based on the detection rules, so that not only can detection rule generation work by a user be effectively supported, but the detection rules of a certain level or higher can also be generated reliably without asking the skillful degree of detection rule generation.

The present invention is not limited to the aforementioned embodiment, and various changes and modifications are possible within the scope of the present invention. For example, the symptom database, the configuration information storing section, and the history information storing section may be included in the storage device of an external computer connected through a network to the detection rule generating apparatus according to the embodiment, and read as necessary.

## Claims

1. A detection rule generating apparatus for generating event detection rules in a system including plural components, the apparatus comprising:
configuration information acquiring means for acquiring system configuration information on the system including related information among the components;
history information collecting means for collecting history information on the system including log information and/or failure information output from each component upon occurrence of a failure in the system;
candidate event identifying means for identifying candidate events, as candidates to be selected for generating a detection rule, based on the acquired system configuration information and the collected history information; and
candidate event presenting means for presenting the identified candidate events.

2. The detection rule generating apparatus according to claim 1, further comprising:
detection rule generating/storing means for generating and storing the detection rule in a database; and
candidate event detecting means for detecting candidate events based on the stored detection rule,
wherein the candidate event presenting means presents the detected candidate events.

3. The detection rule generating apparatus according to claim 1 or 2, further comprising
data format converting means for converting the collected log information and/or failure information into a unified data format beforehand,
wherein the history information collecting means collects the log information and/or failure information converted in the unified data format.

4. The detection rule generating apparatus according to any one of claims 1 to 3, further comprising:
event selection accepting means for accepting user's selection of at least one event;
detection rule extracting means for extracting a detection rule according to a topology including one or more components corresponding to the at least one event the selection of which has been accepted;
detection rule presenting means for presenting the extracted detection rule; and
database updating means for accepting updating of the extracted detection rule and updating the database.

5. The detection rule generating apparatus according to claim 4, further comprising
singular/plural determination means for determining whether the number of events the selection of which has been accepted by the event selection accepting means is singular,
wherein if the singular/plural determination means determines that the number of events is singular, the detection rule extracting means extracts the detection rule as a filter pattern for checking the event.

6. The detection rule generating apparatus according to claim 5, further comprising:
component determination means for determining whether the number of components that sent out events the selection of which has been accepted is singular if the singular/plural determination means determines that the number of events is plural; and
event determination means for determining whether the events the selection of which has been accepted are of the same kind if the component determination means determines that the number of components is singular,
wherein if the event determination means determines that the events are of the same kind, the detection rule extracting means extracts the detection rule as a threshold pattern for comparing a certain numeric value with a threshold, or
if the event determination means determines that the events are of plural kinds, the detection rule extracting means extracts the detection rule as a sequence pattern for detecting the presence or absence of a sequence of events.

7. The detection rule generating apparatus according to claim 6, further comprising:
connection determination means for determining whether plural components are connected in a topology if the component determination means determines that the number of components is plural; and
parallel relationship determining means for determining whether the plural components are in a parallel relationship if the connection determination means determines that the plural components are not connected,
wherein if the parallel relationship determining means determines that the plural components are not in the parallel relationship, the detection rule extracting means extracts the detection rule as the sequence pattern.

8. The detection rule generating apparatus according to claim 7, further comprising
event determination means for determining whether the events the selection of which has been accepted are of the same kind if the parallel relationship determining means determines that the plural components are in the parallel relationship,
wherein if the event determination means determines that the events are of the same kind, the detection rule extracting means extracts the detection rule as the threshold pattern, or
if the event determination means determines that the events are of plural kinds, the detection rule extracting means extracts the detection rule as the sequence pattern.

9. The detection rule generating apparatus according to claim 7, wherein if the connection determination means determines that the plural components are connected, the detection rule extracting means extracts the detection rule as the sequence pattern.

10. The detection rule generating apparatus according to claim 7, further comprising:
serial relationship determining means for determining whether the plural components are in a serial relationship if the connection determination means determines that the plural components are connected; and
event determination means for determining whether the events the selection of which has been accepted are of the same kind if the serial relationship determining means determines that the plural components are not in the serial relationship,
wherein if the event determination means determines that the events are of the same kind, the detection rule extracting means extracts the detection rule as an ordered sequence pattern the order of which is identified,
if the event determination means determines that the events are of plural kinds, the detection rule extracting means extracts the detection rule as an unordered sequence pattern the order of which is not identified, or
if the serial relationship determining means determines that the plural components are in the serial relationship, the detection rule extracting means extracts the detection rule as the ordered sequence pattern the order of which is identified.

11. A detection rule generating method executable on a detection rule generating apparatus for generating event detection rules in a system including plural components, the method comprising the steps of:
acquiring system configuration information on the system including related information among the components;
collecting history information on the system including log information and/or failure information output from each component upon occurrence of a failure in the system;
identifying candidate events, as candidates to be selected for generating a detection rule, based on the acquired system configuration information and the collected history information; and
presenting the identified candidate events.

12. The detection rule generating method according to claim 11, further comprising the steps of:
generating and storing the detection rule in a database;
detecting candidate events based on the stored detection rule; and
presenting the detected candidate events.

13. The detection rule generating method according to claim 11 or 12, further comprising the steps of:
converting the collected log information and/or failure information into a unified data format beforehand; and
collecting the log information and/or failure information converted in the unified data format.

14. The detection rule generating method according to any one of claims 11 to 13, further comprising the steps of:
accepting user's selection of at least one event;
extracting a detection rule according to a topology including one or more components corresponding to the at least one event the selection of which has been accepted;
presenting the extracted detection rule;
accepting updating of the presented detection rule and updating the database.

15. A computer program executable on a detection rule generating apparatus for generating event detection rules in a system including plural components, the computer program causing the detection rule generating apparatus to function as:
configuration information acquiring means for acquiring system configuration information on the system including related information among the components;
history information collecting means for collecting history information on the system including log information and/or failure information output from each component upon occurrence of a failure in the system;
candidate event identifying means for identifying candidate events, as candidates to be selected for generating a detection rule, based on the acquired system configuration information and the collected history information; and
candidate event presenting means for presenting the identified candidate events.

16. The computer program according to claim 15, the computer program causing the detection rule generating apparatus to further function as:
detection rule generating/storing means for generating and storing the detection rule in a database; and
candidate event detecting means for detecting candidate events based on the stored detection rule,
wherein the candidate event presenting means presents the detected candidate events.

17. The computer program according to claim 15 or 16, the computer program causing the detection rule generating apparatus to further function as
data format converting means for converting the collected log information and/or failure information into a unified data format beforehand,
wherein the history information collecting means collects the log information and/or failure information converted in the unified data format.

18. The computer program according to any one of claims 15 to 17, the computer program causing the detection rule generating apparatus to further function as:
event selection accepting means for accepting user's selection of at least one event;
detection rule extracting means for extracting a detection rule according to a topology including one or more components corresponding to the at least one event the selection of which has been accepted;
detection rule presenting means for presenting the extracted detection rule; and
database updating means for accepting updating of the presented detection rule and updating the database.
